# EUROPÄISCHE PATENTSCHRIFT

(11) **EP 0 943 593 B1**
(45) Veröffentlichungstag und Bekanntmachung des Hinweises auf die Patenterteilung: **21.01.2004**
(21) Anmeldenummer: 99103651.8
(22) Anmeldetag: 25.02.1999
(51) Int. Cl.: C04B 38/00, C04B 41/51, F01N 3/02

(54) **Formkörper aus einer elektrisch leitfähigen Keramik sowie Verfahren zur Herstellung von Kontaktbereichen an solchen Formkörpern**
Electrically conductive ceramic bodies and method of applying electrical contacts onto such bodies
Corps conducteur en céramic et procédé d'établir des contacts sur un tel corps

(30) Priorität: 09.03.1998 DE 19809976
(43) Veröffentlichungstag der Anmeldung: 22.09.1999
(73) Patentinhaber: Thomas Josef Heimbach Gesellschaft mit beschränkter Haftung & Co., D-52353 Düren (DE)
(72) Erfinder: Best, Walter Dr., 52351 Düren (DE); Benthaus, Oliver, 52353 Düren (DE); Schäfer, Wolfgang, 52349 Düren (DE); Schumacher, Uwe, 52224 Stolberg (DE)
(74) Vertreter: Paul, Dieter-Alfred, Dipl.-Ing.

(56) Entgegenhaltungen:
- WO-A-93/13303
- DE-A- 3 704 930
- DE-A- 4 130 630
- DE-C- 4 413 127
- US-A- 4 813 231
- PATENT ABSTRACTS OF JAPAN vol. 011, no. 013 (C-397), 14. Januar 1987 & JP 61 187912 A (MATSUSHITA ELECTRIC IND CO LTD), 21. August 1986

## Beschreibung

Die Erfindung betrifft einen Formkörper aus elektrisch leitfähiger Keramik, insbesondere Filterkörper, wobei der Formkörper aufgrund von Poren durchströmbar ist und Kontaktbereiche für die Anbringung von Elektroden aufweist. Die Erfindung bezieht sich ferner auf ein verfahren zur Herstellung von Kontaktbereichen für die Anbringung von Elektroden an aufgrund von Poren durchströmbaren Formkörpern aus elektrisch leitfähiger Keramik.

Als Filterelemente, aber auch als Träger für Katalysatoren werden zunehmend keramische Formkörper vorgeschlagen. Sie eignen sich insbesondere für die Filtrierung von heißen Gasen, da sie außerordentlich temperaturbeständig sind. sie sollen deshalb u. a. für die Entfernung von Rußpartikeln im Abgas von Dieselmotoren eingesetzt werden. Dabei hat sich Siliciumcarbid als besonders geeignete Keramikverbindung erwiesen, da sie chemisch stabil ist und eine hohe wärmeleitfähigkeit sowie Temperatur- und Temperaturwechselbeständigkeit aufweist (vgl. EP-A-0 796 830, DE-C-41 30 630, EP-A-0 336 683, WO 93/13303).

Für den Einsatz bei Dieselmotoren ist es wichtig, daß die sich am oder im Formkörper abgelagerten Rußteilchen in regelmäßigen Abständen entfernt werden, damit der Durchströmwiderstand in den Wandungen des Formkörpers nicht zu hoch wird. Eine bekannte Abreinigungsmethode besteht darin, den Formkörper durch Anlegen eines elektrischen Stroms so stark aufzuheizen, daß sich die Rußteilchen entzünden und abbrennen. Hierzu muß der Formkörper mit Elektroden verbunden werden, über die der elektrische Strom in den Formkörper eingeleitet werden kann.

Die Verbindung der Elektroden mit dem Formkörper muß temperaturbeständig sein, und sie muß den starken Temperaturwechseln und den mechanischen Beanspruchungen gewachsen sein. Außerdem wird ein möglichst geringer Übergangswiderstand angestrebt. Das Erreichen dieser Ziele macht wegen der porösen und rauhen Oberfläche solcher Formkörper erhebliche Schwierigkeiten. Bekannte Lösungen, wie sie sich beispielsweise aus der US-A-4 505 107, US-A-4 535 539, US-A-4 897 096 und US-A-5 423 904 ergeben, befriedigen nicht.

In der WO 93/13303 A ist ein Formkörper beschrieben, auf dessen Oberfläche Aluminium mittels Flammspritzverfahren aufgetragen wird und dann die Elektroden an das Aluminium angelötet werden. Die Wärmeausdehnung dieses Aluminiumüberzuges unterscheidet sich von der der Keramik. Es treten deshalb wärmespannungen auf, die den Kontakt beeinträchtigen könnten.

Der Erfindung liegt die Aufgabe zugrunde, die Kontaktbereiche an Formkörpern der eingangs genannten Art so zu gestalten, daß eine sichere Anbringung der Elektroden bei geringem Übergangswiderstand gewährleistet ist.

Diese Aufgabe wird erfindungsgemäß dadurch gelöst, daß in die Kontaktbereiche zusätzlich ein elektrisch leitfähiges Metall infiltriert ist, das die elektrische Leitfähigkeit erhöht. Sofern die Keramik aus einer metallischen Keramikverbindung besteht, sollte für die Infiltration vorzugsweise ein Metall verwendet werden, das gleich dem Metall der Keramikverbindung ist. Dabei ist unter einer metallischen Keramikverbindung im Sinne der vorliegenden Beschreibung eine Verbindung zu verstehen, die wenigstens ein Metallatom aufweist.

Es hat sich gezeigt, daß sich durch Infiltration eines elementaren Metalls Kontaktbereiche herstellen lassen, die sich durch Temperaturbeständigkeit und eine für die Befestigung von Elektroden günstige, stabile Oberfläche und geringen Übergangswiderstand auszeichnen. Über den gesamten Temperaturbereich unterscheidet sich die Wärmeausdehnung der Kontaktbereiche nicht wesentlich von den übrigen Bereichen des Formkörpers, d. h. es treten keine Wärmespannungen auf, die den Kontakt beeinträchtigen könnten. Außerdem sind die Kontaktbereiche korrosionsbeständig.

Unter dem Begriff Metall - sowohl in elementarer Form als auch als Verbindungsbestandteil einer Keramikverbindung - sind im Sinne dieser Beschreibung nicht nur metallische, sondern auch metallartige Elemente, beispielsweise Halbmetalle, zu verstehen. In Frage kommen können neben Silicium auch Wolfram, Tantal, Hafnium, Zirkonium, Titan, Molybdän etc. Der Formkörper selbst kann z. B. aus Metallcarbiden (SiC, WC, TaC, HfC, ZrC, TiC), Metallnitriden (ZrN, TiN), Metallboriden (TiB₂, ZrB₂) oder Siliciden (MoSi₂) bestehen. Besonders bewährt hat sich Siliciumcarbid.

Um zu vermeiden, daß sich das zu inf iltrierende Metall über den gesamten Formkörper ausbreitet, ist vorgeschlagen, daß die Kontaktbereiche zusätzliche Kontaktschichten aus einer elektrisch leitfähigen Keramik aufweisen, in die das Metall infiltriert ist, wobei zweckmäßigerweise die Keramik der Kontaktschichten die gleiche ist wie die des Formkörpers. Ein zu starkes Eindringen des Metalls in den Formkörper selbst kann vor allem dadurch vermieden werden, daß Kontaktschichten feinporiger ausgebildet werden als der Formkörper selbst. In den Kontaktschichten entstehen hierdurch höhere Kapillarkräfte als in dem Formkörper. Diese Kapillarkräfte begrenzen die Infiltration des Metalls in den Formkörper, wobei es durchaus von Vorteil sein kann, wenn das Metall teilweise über die Kontaktschichten hinaus in den Formkörper infiltriert ist. Die Kontaktschichten können zumindest teilweise in den Formkörper eingedrückt sein. Aufgrund solcher Kontaktschichten ergeben sich glatte und hoch leitfähige Kontaktflächen.

Nach der Erfindung ist ferner vorgesehen, daß der Formkörper einen Kernkörper und Anschlußkörper aufweist, die miteinander verbunden sind, wobei die Kontaktbereiche an den Anschlußkörpern sitzen. Die Infiltration des Metalls kann dabei auf die Anschlußkörper begrenzt werden, indem nur diese getrennt von dem Kernkörper Infiltrationsbedingungen ausgesetzt und dann anschließend mit dem Kernkörper verbunden werden. vorzugsweise haben Kernkörper und Anschlußkörper die gleiche Keramikbasis. Die Anschlußkörper können als Endkörper dienen. Die Aufteilung des Formkörpers in Kernkörper und Endkörper hat zusätzlich den Vorteil, daß bei der Herstellung des Endkörpers gleichzeitig auch die Verschlüsse für die durch die Endkörper gehenden Strömungskanäle vorgesehen werden können, z. B. durch entsprechende Formgebung der Endkörper.

ES ist jedoch nicht zwingend, daß die Anschlußkörper gleichzeitig auch die Endkörper bilden. Sie können unter Aufteilung des Kernkörpers zwischen dessen Teilen angeordnet werden, um andere Strompfade zu realisieren. In beiden Fällen ist es zweckmäßig, wenn die Anschlußkörper als Fortsetzung des Kernkörpers ausgebildet sind, also insbesondere Durchströmkanäle in der gleichen Anordnung und mit gleichen Querschnitten aufweisen. Alternativ können die Anschlußkörper aber auch seitlich an dem Kernkörper angesetzt werden. Es versteht sich, daß über die Anschlußkörper auch eine Mehrzahl von Kernkörpern parallel oder in Reihe miteinander verbunden werden können.

Die Verbindung der Anschlußkörper mit dem Kernkörper kann beispielsweise durch stoffschlüssiges Fügen mittels Aktivlötenten geschehen (vgl. M. Boretius, E. Lugschneider, Aktivlöten - Stoffschlüssiges Fügen keramischer Werkstoffe untereinander und mit Metall, VDI Berichte Nr. 670, 1988). Stattdessen besteht aber auch die Möglichkeit, die Anschlußstücke über eine Verbindungsschicht aus elektrisch leitfähiger Keramik stoffschlüssig mit dem Kernkörper zu verbinden, wobei zweckmäßigerweise auch hier die Keramik von Formkörper und verbindungsschicht dieselbe ist. Hierdurch entsteht eine feste, elektrisch leitfähige Verbindung zwischen den Teilkörpern. Gleichfalls kann es empfehlenswert sein, die Verbindungsschicht feinporiger auszubilden als den Formkörper, um in die Verbindungsschicht ebenfalls elektrisch leitfähiges Metall infiltrieren zu können. Hierdurch wird der Übergangswiderstand zwischen den Teilkörper klein gehalten. Dabei ist es durchaus erwünscht, wenn das in die Anschlußkörper infiltrierte Metall teilweise auch in die verbindungsschicht infiltriert ist.

Nach einem weiteren Merkmal der Erfindung ist vorgesehen, daß wenigstens ein Anschlußkörper mit einem Anschlußstück versehen ist, welches Kontaktbereiche hat. Insbesondere wenn die Anschlußkörper Fortsetzungen des Kernkörpers bilden, können hierdurch die Kontaktbereiche für die Anbringung der Elektroden aus dem "heißen" Bereich des Kernkörpers in kühlere Bereiche verlagert werden. Die Formgebung der Anschlußstücke kann entsprechend dem vorgenannten Zweck beliebig sein. Es bietet sich an, daß die Anschlußstücke wie die Anschlußkörper aus einer elektrisch leitfähigen Keramik mit darin infiltriertem elektrisch leitfähigem Metall bestehen, und zwar zweckmäßigerweise aus der gleichen Keramik, aus der auch die Anschlußkörper bestehen, und mit dem gleichen Metall infiltriert. Anschlußkörper und Anschlußstücke können dabei als ein einheitliches Formstück ausgebildet sein. Wenn dies aus herstellungstechnischen Gründen nicht möglich ist, können die Anschlußstücke auch separat hergestellt werden - zweckmäßigerweise im gleichen Arbeitsgang mit den Anschlußkörpern - und dann mit dem jeweiligen Anschlußkörper verbunden werden. Für die Verbindung kommen die gleichen Verfahren in Frage, wie sie oben für die Verbindung von Anschlußkörper und Kernkörper beschrieben sind.

Die Infiltration des elektrisch leitfähigen Metalls in die Poren der Kontaktbereiche geschieht durch Erhitzen des betreffenden Metalls zumindest auf seine Schmelztemperatur, vorzugsweise sogar auf eine höhere Temperatur, um einen Reaktionsbrand durchzuführen. Die Temperatur kann auch so hoch liegen, daß die Infiltration teilweise oder vollständig über die Dampfphase vorgenommen werden kann. Wenn als Metall Silicium verwendet wird, sollte die Temperatur mindestens 1400°C, vorzugsweise 1600°C betragen. Die Infiltration wird unter Vakuum oder Schutzgas durchgeführt, um die Einwirkung von Sauerstoff auszuschließen.

Das zu infiltrierende Metall kann in elementarer Form vor dem Infiltrationsvorgang auf die Kontaktflächen aufgebracht werden, beispielsweise als Pulver, Paste, Plättchen, Folie oder dergleichen. In Frage kommt aber auch die verwendung eines Gemischs aus Substanzen, in denen das Metall überstöchiometrisch vorliegt und das sich durch Erhitzen auf Reaktionstemperatur teilweise zu einer elektrisch leitfähigen Keramik umsetzt.

Alternativ dazu ist vorgesehen, daß die Kontaktbereiche mit einer Kontaktbeschichtung versehen werden, die Substanzen für die Bildung einer elektrisch leitfähigen Keramikverbindung enthalten, daß diese Substanzen durch Erhitzung auf mindestens Reaktionstemperatur zu der Keramikverbindung unter Bildung von feinporösen Kontaktschichten umgesetzt wird und daß das Metall gleichzeitig oder danach in die Poren der Kontaktschichten infiltriert wird. Die Kontaktbeschichtung kann beispielsweise in Pastenform vorliegen und dabei auch einen Überschuß an dem zu infiltrierenden Metall haben. Stattdessen kann das Metall auch in Pulver-, Pasten- und Plättchenform auf der Außenseite der Kontaktbeschichtung aufgebracht und dann Infiltrationsbedingungen unterworfen werden. Dabei sollte die Umsetzung so vorgenommen werden, daß eine Porosität erzielt wird, die geringer ist als die des Formkörpers. Dies vermeidet weitgehend das Infiltrieren des Metalls in den Formkörper selbst. Ferner kann es erwünscht sein, daß das Metall in einer solchen Menge verwendet wird, daß es noch teilweise bis in den Formkörper infiltriert.

Das erfindungsgemäße Verfahren kann so gestaltet werden, daß zunächst ein Kernkörper sowie Anschlußkörper hergestellt werden, daß das Metall nur in die Anschlußkörper getrennt vom Kernkörper infiltriert wird und Kern- und Anschlußkörper miteinander verbunden werden. Auf diese Weise ist gesichert, daß die Infiltration des Metalls auf die Anschlußkörper begrenzt bleibt. Die Verbindung der Anschlußkörper mit dem Kernkörper kann über Aktivlöten, Hochtemperaturlöten oder Diffusionsschweißen geschehen. Zweckmäßig ist aber auch eine alternative Verfahrensweise, bei der auf die zu verbindenden Flächen von Anschlußkörpern und/oder Kernkörper eine Verbindungsbeschichtung aufgetragen wird, die Substanzen für die Bildung einer elektrisch leitfähigen Keramikverbindung enthalten, und daß diese Substanzen zu der Keramikverbindung durch Erhitzen auf wenigstens Reaktionstemperatur zur Bildung einer elektrisch leitfähigen Verbindungsschicht umgesetzt werden. Zweckmäßigerweise erfolgt die Umsetzen der Substanzen zu der Keramikverbindung gleichzeitig mit der Infiltration des Metalls in die Poren der Kontaktbereiche. Dabei ist es für die Verbindung günstig, daß für die Verbindungsbeschichtungen Substanzen verwendet werden, welche sich zu der gleichen Keramikverbindung umsetzen, aus der auch der Formkörper besteht.

Auch bei dieser Verbindungart besteht die Möglichkeit, in die verbindungsschicht ein elektrisch leitfähiges Metall zu infiltrieren, wobei es auch dann zweckmäßig ist, wenn bei der Umsetzung der Verbindungsschicht eine geringere Porosität erzielt wird als die des Formkörpers. Sofern eine metallische Keramikverbindung verwendet wird, ist es von Vorteil, wenn zum Infiltrieren wiederum ein Metall verwendet wird, das gleich dem Metall der Keramikverbindung ist, welche die verbindungsschicht bildet. Die Infiltration des Metalls kann beispielsweise dadurch erfolgen, daß das Metall in der verbindungsbeschichtung überstöchiometrisch vorliegt. Dabei sollte eine solche Menge Metall verwendet werden, daß es auch teilweise zu einer Infiltration in den Formkörper kommt.

Schließlich ist gemäß der Erfindung vorgesehen, daß die Elektroden durch Aktivlöten, Hochtemperaturlöten oder Diffusionsschweißen mit den Kontaktflächen verbunden werden. Die Elektroden sollten in ihrer Wärmedehnung durch geometrische oder stoffspezifische Faktoren an die des Formkörpers angepaßt sein.

In der Zeichnung ist die Erfindung anhand von Ausführungsbeispielen näher veranschaulicht. Es zeigen:
- Figur 1: die Schrägansicht eines Teils eines Formkörpers mit separatem Anschlußkörper;
- Figur 2: die Schrägansicht eines Formkörpers mit einem anderen Anschlußkörper und
- Figur 3: die Schrägansicht eines anderen Formkörpers.

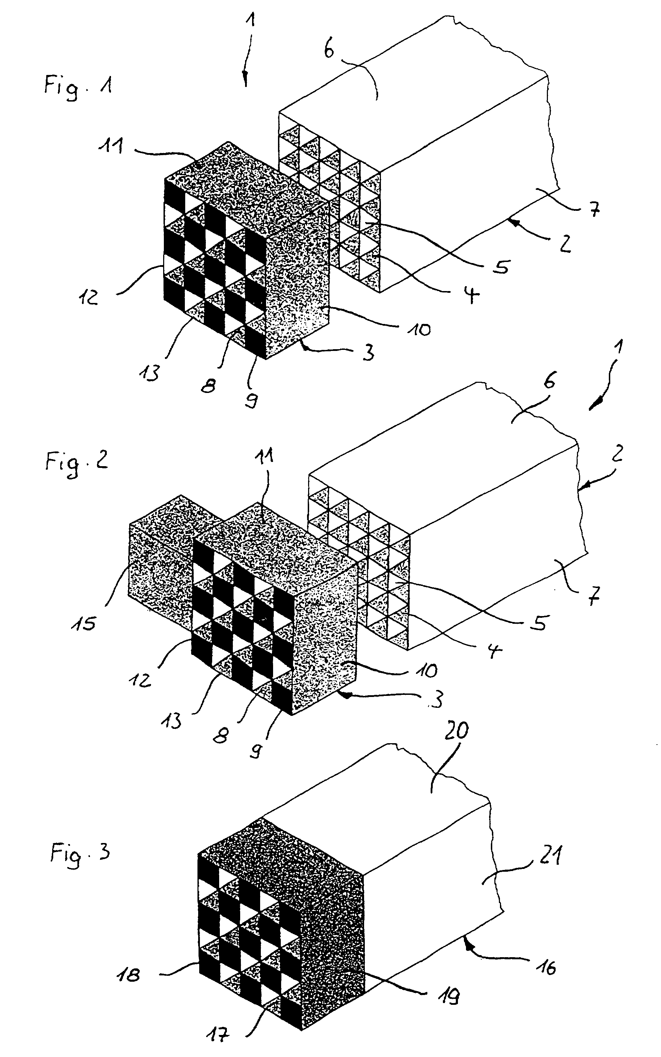

Der in Figur 1 dargestellte Formkörper 1 besteht aus einem Kernkörper 2 und zwei Endkörper bildenden Anschlußkörpern 3, die in Durchströmrichtung gesehen für die Endbereiche des Kernkörpers 2 bestimmt sind und von denen hier nur einer gezeigt ist. Der Kernkörper 2 ist wabenförmig aufgebaut und weist demgemäß eine Vielzahl von sich in Längsrichtung erstreckenden Durchströmkanälen - beispielhaft mit 4 bezeichnet - auf. Die Durchströmkanäle 4 sind durch poröse Zwischenwandungen - beispielhaft mit 5 bezeichnet - getrennt. Auch die Außenwandungen 6, 7 sind porös.

Der Anschlußkörper 3 ist gleichartig wie der Kernkörper 2 aufgebaut und bildet nach Verbindung der beiden Körper 2, 3 eine Fortsetzung des Kernkörpers 2. Auch er weist Durchströmkanäle - beispielhaft mit 8 bezeichnet - auf, welche koaxial zu den Durchströmkanälen 4 im Kernkörper 2 liegen. Allerdings ist jeder zweite Durchströmkanal 8 mittels einer Verstopfung oder Abdeckung - beispielhaft mit 9 bezeichnet - geschlossen, so daß sich ein schachbrettartiges Muster von geschlossenen und offenen Durchströmkanälen 8 ergibt. Der hier nicht gezeigte, für das andere Ende des Kernkörpers 2 vorgesehene Anschlußkörper ist in gleicher Weise als Endkörper ausgebildet wie der Anschlußkörper 3, jedoch mit dem Unterschied, daß die beim Anschlußkörper 3 offenen Durchströmkanäle 8 geschlossen und die beim Anschlußkörper 3 geschlossenen Durchströmkanäle 8 offen sind. Hierdurch wird der über den Anschlußkörper 3 einströmende Gasstrom gezwungen, durch die Zwischenwandungen 5 hindurchzuströmen, da er nur so in die beim anderen Anschlußkörper offenen Durchströmkanäle gelangt. Die Durchströmung der Zwischenwandungen 5 erzeugt die Filterwirkung des Formkörpers 1.

Der Kernkörper 2 und die Anschlußkörper 3 bestehen aus einem elektrisch leitfähigen Siliciumcarbid. In die Anschlußkörper 3 ist zusätzlich elementares Silicium einfiltriert worden. Die Infiltration erfolgte bei 1600°C unter Vakuum, wobei das Silicium in Plättchenform auf die Außenwandungen 10, 11, 12, 13 aufgebracht worden ist. Statt der Plättchen können auch Suspensionen, Pasten oder dergleichen mit elementarem Silicium aufgebracht werden. Es besteht ferner die Möglichkeit, die Anschlußkörper 3 nach Verflüssigung des Siliciums in dieses einzutauchen. Die Infiltration des Siliciums in die Anschlußkörper 3 hat zur Folge, daß diese eine um den Faktor 10 bis 100 verbesserte elektrische Leitfähigkeit erhalten. Außerdem entsteht eine glattere Oberfläche. Beides begünstigt das Anlöten von Elektroden, über die dann elektrischer Strom durch die Anschlußkörper 3 und den Kernkörper 2 geleitet werden kann.

Nach der Infiltration werden die Anschlußkörper 3 mit dem Kernkörper 2 verbunden. Dies kann durch Aktivlöten geschehen. Es besteht aber auch die Möglichkeit, die Anlageflächen von Kernkörper 2 und Anschlußkörper 3 mit einer Paste aus Silicium- und Kohlenstoffpulver - eventuell noch versetzt mit kohlenstoffhaltigen Hilfsstoffen - zu versehen und dann die Anschlußkörper 3 an den Kernkörper 2 anzusetzen und den so gebildeten Formkörper 1 einem Reaktionsbrand auszusetzen. Hierdurch entsteht SiC, das bei dem Reaktionsbrand eine stoffschlüssige Verbindung mit dem SiC der Anschlußkörper 3 und des Kernkörpers 2 eingeht und so für eine feste und zudem elektrisch leitfähige Verbindung sorgt. Zur Herabsetzung des Übergangswiderstands kann auch hier zusätzlich Silicium infiltriert werden, beispielsweise indem es in der Paste überstöchiometrisch vorliegt.

Das Ausführungsbeispiel gemäß Figur 2 unterscheidet sich von dem gemäß Figur 1 nur dadurch, daß die Anschlußkörper 3 an einer Seite angesetzte Anschlußstücke 15 aufweisen, in die in oben beschriebener Weise Silicium infiltriert ist und die deshalb Kontaktbereiche für Elektroden bilden.

Bei dem.Ausführungsbeispiel gemäß Figur 3 liegt ein einstükkiger Formkörper 16 aus Siliciumcarbid mit einer Länge von 30 cm, einer Kantenlänge von 4 cm und einem Längenwiderstand von 3 Ohm bei Raumtemperatur vor. In gleicher Weise wie bei den Anschlußkörpern 3 gemäß den Figuren 1 und 2 sind an den Enden des Formkörpers 16 jeder zweite Durchströmkanal - beispielhaft mit 17 7 bezeichnet - durch eine Abdeckung - beispielhaft mit 18 bezeichnet - geschlossen, so daß sich auch hier ein schachbrettartiges Muster von offenen und geschlossenen Durchströmkanälen 17 bildet. Die an der gezeigten Seite offenen Durchströmkanäle 17 sind an der anderen Seite geschlossen, während die mit den Abdeckungen 18 versehenen Durchströmkanäle 17 an der anderen Seite offen sind.

Beide Endbereiche des Formkörpers 16 sind mit einer Kontaktschicht 19 versehen, die sich über den Umfang des Formkörpers 16 erstreckt. Die Kontaktschicht 19 ist teilweise in die Außenwandungen 20, 21 des Formkörpers 16 eingedrückt. Für die Herstellung der Kontaktschicht sind zunächst Siliciumpulver mit einer Korngröße < 100µm und Graphitpulver mit einer Korngröße < 100µm im Gewichtsverhältnis 3:1 gemischt worden. Dann wurde ein kohlenstoffhaltiger Binder in einer Menge zugesetzt, daß der Kohlenstoff leicht unterstöchiometrisch vorgelegen hat. Dieses Pulvergemisch wurde mit gerade so viel Wasser angerührt, daß eine bindige, zähe Paste entstand, die auf die beiden Enden des Formkörpers 16 2cm breit aufgestrichen wurde. Auf jedem Ende des Formkörpers 16 wurden 4g der Paste als dünne Schicht aufgetragen. Die so erhaltenen Kontaktbeschichtungen wurden zusätzlich mit 2 bis 7g Silicium in Plättchen- oder Pulverform anpräpariert.

Nach einer Trocknung bei 130°C wurde der Formkörper 16 bei 1600°C unter Vakuum einem Reaktions- und Infiltrationsbrand unterzogen. Hierbei wurde der Binder pyrolisiert und in reaktionsfähigen Kohlenstoff umgewandelt. Die Kontaktbeschichtung reagierte zu SiC unter Ausbildung der Kontaktschicht 19 mit einer wesentlich geringeren Porosität als die des Formkörpers 16. Gleichzeitig wurde das elementare Silicium in die Kontaktschicht 19 infiltriert, wobei die Infiltration im wesentlichen auf die Kontaktschicht 19 beschränkt blieb, da sie wegen ihrer Feinporigkeit höhere Kapillarkräfte erzeugt als der Formkörper 16 selbst. Die Kontaktschicht 19 wurde stoffschlüssig mit dem übrigen Formkörper 16 verbunden und hat mit diesem im wesentlichen gleiche Eigenschaften. Allerdings ist die elektrische Leitfähigkeit um den Faktor 10 bis 100 höher als im Formkörper 16 selbst.

## Patentansprüche

1. Formkörper (1, 16) aus einer elektrisch leitfähigen Keramik, insbesondere Filterkörper, wobei der Formkörper aufgrund von Poren durchströmbar ist und Kontaktbereiche (10, 11, 12, 13, 19) für die Anbringung von Elektroden aufweist, **dadurch gekennzeichnet, daß** in die Kontaktbereiche (10, 11, 12, 13, 19) zusätzlich ein elektrisch leitfähiges Metall infiltriert ist, das die elektrische Leitfähigkeit lokal erhöht.

2. Formkörper nach Anspruch 1, **dadurch gekennzeichnet, daß** die Keramik aus einer metallischen Keramikverbindung besteht und das Metall der Keramikverbindung und das infiltrierte Metall gleich sind.

3. Formkörper nach Anspruch 1 oder 2, **dadurch gekennzeichnet, daß** die Kontaktbereiche Kontaktschichten (19) aus einer elektrisch leitfähigen Keramik aufweisen, in die das Metall infiltriert ist und daß die Kontaktschichten (19) feinporiger ausgebildet sind als der Formkörper (16).

4. Formkörper nach Anspruch 3, **dadurch gekennzeichnet, daß** das Metall teilweise über die Kontaktschichten (19) hinaus in den Formkörper (16) infiltriert ist.

5. Formkörper nach einem der Ansprüche 1 bis 4, **dadurch gekennzeichnet, daß** der Formkörper (1) einen Kernkörper (2) und Anschlußkörper (3) aufweist, die untereinander verbunden sind, wobei die Kontaktbereiche (10, 11, 12, 13) an den Anschlußkörpern (3) sitzen.

6. Formkörper nach Anspruch 5, **dadurch gekennzeichnet, daß** die Anschlußkörper (3) als Fortsetzungen des Kernkörpers (2) ausgebildet sind.

7. Formkörper nach Anspruch 5 oder 6, **dadurch gekennzeichnet, daß** die Anschlußkörper (3) mit dem Kernkörper (2) durch Aktivlöten, Hochtemperaturlöten oder Diffusionsschweißen oder über eine Verbindungsschicht aus einer elektrisch leitfähigen Keramik mit dem Kernkörper (2) verbunden sind.

8. Formkörper nach einem der Ansprüche 5 bis 7, **dadurch gekennzeichnet, daß** die Anschlußkörper (3) zusätzliche Anschlußstücke (15) aufweisen, welche Kontaktbereiche haben.

9. Formkörper nach Anspruch 8, **dadurch gekennzeichnet, daß** die Anschlußstücke aus einer elektrisch leitfähigen Keramik mit darin infiltriertem elektrisch leitfähigem Metall bestehen.

10. Verfahren zur Herstellung von Kontaktbereichen (10, 11, 12, 13, 19) für die Anbringung von Elektroden an aufgrund von Poren durchströmbaren Formkörpern (1, 16) aus einer elektrisch leitfähigen Keramik, **dadurch gekennzeichnet, daß** in die Kontaktbereiche (10, 11, 12, 13, 19) zusätzlich ein elektrisch leitfähiges Metall infiltriert wird, das die elektrische Leitfähigkeit lokal erhöht.

11. Verfahren nach Anspruch 10, **dadurch gekennzeichnet, daß** eine metallische Keramikverbindung verwendet und in diese ein Metall infiltriert wird, welches gleich dem Metall der Keramikverbindung ist.

12. Verfahren nach Anspruch 10 oder 11, **dadurch gekennzeichnet, daß** für die Infiltration ein Gemisch aus Substanzen verwendet wird, in dem das Metall überstöchiometrisch vorliegt und das sich durch Erhitzen auf Reaktionstemperatur teilweise zu einer elektrisch leitfähigen Keramikverbindung umsetzt.

13. Verfahren nach einem der Ansprüche 10 bis 12, **dadurch gekennzeichnet, daß** die Kontaktbereiche (10, 11, 12, 13) mit einer Kontaktbeschichtung versehen werden, die Substanzen für die Bildung einer elektrisch leitfähigen Keramikverbindung enthalten, daß diese Substanzen durch Erhitzung auf mindestens Reaktionstemperatur zu der Keramikverbindung unter Bildung von porösen Kontaktschichten (19) umgesetzt werden und daß das Metall gleichzeitig oder danach in die Poren der Kontaktschichten (19) infiltriert wird.

14. Verfahren nach Anspruch 13, **dadurch gekennzeichnet, daß** für die Kontaktbeschichtungen Substanzen verwendet werden, welche sich zu derselben Keramikverbindung umsetzen, aus der auch der Formkörper (16) besteht.

15. Verfahren nach Anspruch 13 oder 14, **dadurch gekennzeichnet, daß** bei der Umsetzung eine Porosität erzielt wird, die geringer ist als die des Formkörpers (16).

16. Verfahren nach einem der Ansprüche 12 bis 15, **dadurch gekennzeichnet, daß** das Metall in einer solchen Menge verwendet wird, daß es teilweise auch in den Formkörper (16) infiltriert.

17. Verfahren nach Anspruch 16, **dadurch gekennzeichnet, daß** zunächst ein Kernkörper (2) und Anschlußkörper (3) hergestellt werden, daß das Metall in die Anschlußkörper (3) inf iltriert wird und daß Kern- und Anschlußkörper (2, 3) miteinander verbunden werden.

18. Verfahren nach Anspruch 17, **dadurch gekennzeichnet, daß** die Anschlußkörper (3) an den Enden des Kernkörpers (2) angesetzt werden.

19. Verfahren nach Anspruch 17 und 18, **dadurch gekennzeichnet, daß** die Anschlußkörper (3) mit dem Kernkörper (2) durch Aktivlöten, Hochtemperaturlöten oder Diffusionsschweißen verbunden werden oder daß auf die zu verbindenden Flächen von Anschlußkörper (3) und/oder Kernkörper (2) eine Verbindungsbeschichtung aufgetragen wird, die Substanzen für die Bildung einer elektrisch leitfähigen Keramikverbindung enthält, und daß diese Substanzen zu der Keramikverbindung durch Erhitzen auf wenigstens Reaktionstemperatur unter Bildung einer Verbindungsschicht umgesetzt werden.

20. Verfahren nach Anspruch 19, **dadurch gekennzeichnet, daß** das Umsetzen der Substanzen zu der Keramikverbindung gleichzeitig mit der Infiltration des Metalls in die Poren der Kontaktbereiche (10, 11, 12, 13) durchgeführt wird.

21. Verfahren nach Anspruch 19 oder 20, **dadurch gekennzeichnet, daß** bei der Umsetzung eine Porosität erzielt wird, die geringer ist als die des Formkörpers (1).

22. Verfahren nach einem der Ansprüche 19 bis 21, **dadurch gekennzeichnet, daß** in die Verbindungsschicht ein elektrisch leitfähiges Metall infiltriert wird und daß für die Verbindungsbeschichtung Substanzen verwendet werden, die sich zu einer metallischen Keramikverbindung umsetzen, und daß zum Infiltrieren ein Metall verwendet wird, das gleich dem Metall dieser Keramikverbindung ist.

23. Verfahren nach Anspruch 22, **dadurch gekennzeichnet, daß** das Metall in einer solchen Menge verwendet wird, daß es auch teilweise in den Formkörper (1) infiltriert.

24. Verfahren nach einem der Ansprüche 17 bis 23, **dadurch gekennzeichnet, daß** wenigstens ein Anschlußkörper (3) mit einem Anschlußstück (15) versehen ist, welches Kontaktbereiche aufweist.

25. Verfahren nach Anspruch 24, **dadurch gekennzeichnet, daß** die Anschlußstücke (15) aus einer elektrisch leitfähigen Keramik mit darin infiltriertem elektrisch leitfähigem Metall bestehen.

26. Verfahren nach einem der Ansprüche 1 bis 25, **dadurch gekennzeichnet, daß** die Elektroden mit den Kontaktbereichen (10, 11, 12, 13, 19) durch Aktivlöten, Hochtemperaturlöten oder Diffusionsschweißen verbunden werden.

## Claims

1. Molded part (1, 16) made of an electrically conductive ceramic, in particular filter parts, wherein the molded part is a flow-through part because of pores and has contact zones (10, 11, 12, 13, 19) for attaching electrodes, **characterized in that** the contact zones (10, 11, 12, 13, 19) have an electrically conductive metal infiltrated into them and improving the electrical conductivity locally.

2. Molded part according to claim 1, **characterized in that** the ceramic consists of a metallic ceramic compound and the metal of the ceramic compound and the infiltrated metal are the same.

3. Molded part according to claim 1 or 2, **characterized in that** the contact zones have contact layers (19) made of an electrically conductive ceramic, into which the metal is infiltrated, and that the contact layers (19) are made with finer pores than those of molded part (16).

4. Molded part according to claim 3, **characterized in that** the metal is infiltrated partially beyond contact layers (19) into molded part (16).

5. Molded part according to one of claims 1 to 4 , **characterized in that** molded part (1) has a core part (2) and connecting parts (3) that are connected to one another, and contact areas (10, 11, 12, 13) sit on the connecting parts (3).

6. Molded part according to claim 5, **characterized in that** the connecting parts (3) are made as continuations of core part (2).

7. Molded part according to claims 5 or 6, **characterized in that** the connecting parts (3) are connected to the core part (2) by active soldering, high temperature soldering or diffusion welding, or by a connecting layer made of an electrically conductive ceramic to the core part (2).

8. Molded part according to one of claims 5 to 7, **characterized in that** the connecting parts (3) have additional attachments (15) with contact zones.

9. Molded part according to claim 8, **characterized in that** the attachments consist of an electrically conductive ceramic with electrically conductive metal infiltrated into them.

10. Process for the production of contact zones (10, 11, 12, 13, 19) for attaching electrodes to molded parts (1, 16) that are flow-through parts because of pores and made of an electrically conductive ceramic, **characterized in that** an electrically conductive metal is additionally infiltrated into the contact zones (10, 11, 12, 13, 19) improving the electrical conductivity locally.

11. Process according to claim 10, **characterized in that** a metallic ceramic compound is used and a metal is infiltrated into it that is the same as the metal of the ceramic compound.

12. Process according to claim 10 or 11, **characterized in that** a mixture of substances is used for the infiltration in which the metal is present in hyperstoichiometric form and is converted by heating to reaction temperature partially into an electrically conductive ceramic compound.

13. Process according to one of claims 10 to 12, **characterized in that** the contact zones (10, 11, 12, 13) are provided with a contact coating that contains substances for the formation of an electrically conductive ceramic compound, wherein these substances are converted by heating to at least reaction temperature into the ceramic compound while forming porous contact layers (19) and wherein the metal simultaneously or afterwards is infiltrated into the pores of contact layers (19).

14. Process according to claim 13, **characterized in that** substances are used for the contact coatings that are converted to the same metallic ceramic compound, out of which also the molded part (16) is consisting.

15. Process according to claim 13 or 14, **characterized in that** a porosity less than that of molded part (16) is achieved during the conversion.

16. Process according to one of claims 12 to 15, **characterized in that** the metal is used in an amount such that it also infiltrates partially into molded part (16) .

17. Process according to claim 16, **characterized in that** first a core part (2) and connecting parts (3) are produced, the metal is infiltrated into connecting parts (3), and core and connecting parts (2 , 3) are connected to each other.

18. Process according to claim 17, **characterized in that** connecting the parts (3) are placed on the ends of core part (2).

19. Process according to claim 17 and 18, **characterized in that** the connecting parts (3) are connected to core part (2) by active soldering, high temperature soldering or diffusion welding or that a connecting coating is applied on the surfaces of connecting parts (3) and/or core part (2) that are to be connected, and it contains substances for the formation of an electrically conductive ceramic compound, and that these substances are converted into the ceramic compound by heating to at least reaction temperature while forming a connecting layer.

20. Process according to claim 19, **characterized in that** the conversion of the substances into the ceramic compound is performed simultaneously with the infiltration of the metal into the pores of contact zones (10, 11, 12, 13).

21. Process according to claim 19 or 20, **characterized in that** a porosity is achieved during the conversion that is less than that of molded part (1).

22. Process according to one of claims 19 to 21, **characterized in that** an electrically conductive metal is infiltrated into the connecting layer and that substances are used for the connecting coating that are converted into a metallic ceramic compound and that a metal that is the same as the metal of this ceramic compound is used for the infiltration.

23. Process according to claim 22, **characterized in that** the metal is used in an amount such that it also partially infiltrates molded part (1).

24. Process according to one of claims 17 to 23, **characterized in that** at least one connecting part (3) is provided with an attachment (15) that has contact zones.

25. Process according to claim 46, **characterized in that** the connecting parts (15) consist of an electrically conductive ceramic with electrically conductive metal infiltrated into it.

26. Process according to one of claims 10 to 25, **characterized in that** the electrodes are connected to contact zones (10, 11, 12, 13, 19) by active soldering, high temperature soldering or diffusion welding.

## Revendications

1. Corps (1, 16) en céramique électroconductrice, en particulier corps filtrant, lequel corps se laisse traverser en raison de la présence de pores et présente des zones de contact (10, 11, 12, 13, 19) pour la fixation d'électrodes, **caractérisé par le fait que** dans les zones de contact (10, 11, 12, 13, 19) est infiltré en plus un métal électroconducteur qui augmente localement la conductibilité électrique.

2. Corps selon la revendication 1, **caractérisé par le fait que** la céramique est constituée d'un composé céramique métallique et que le métal du composé céramique est identique au métal infiltré.

3. Corps selon la revendication 1 ou 2, **caractérisé par le fait que** les zones de contact présentent des couches de contact (19) en céramique électroconductrice dans lesquelles le métal est infiltré et que les couches de contact (19) sont formées de pores plus fins que le corps (16).

4. Corps selon la revendication 3, **caractérisé par le fait que** le métal est infiltré partiellement au-delà des couches de contact (19) dans le corps (16).

5. Corps selon l'une des revendications 1 à 4, **caractérisé par le fait que** le corps (1) présente un corps central (2) et des corps de raccord (3) qui sont reliés ensemble, les zones de contact (10, 11, 12, 13) étant situées sur les corps de raccord (3).

6. Corps selon la revendication 5, **caractérisé par le fait que** les corps de raccord (3) sont conçus comme des prolongements du corps central (2).

7. Corps selon la revendication 5 ou 6, **caractérisé par le fait que** les corps de raccord (3) sont reliés au corps central (2) par brasage actif, brasage haute température ou soudage par diffusion ou par une couche de liaison en céramique électroconductrice.

8. Corps selon l'une des revendications 5 à 7, **caractérisé par le fait que** les corps de raccord (3) présentent des pièces de raccord supplémentaires (15) qui possèdent des zones de contact.

9. Corps selon la revendication 8, **caractérisé par le fait que** les pièces de raccord sont constituées d'une céramique électroconductrice dans laquelle est infiltré un métal électroconducteur.

10. Procédé pour la réalisation de zones de contact (10, 11, 12, 13, 19) pour la fixation d'électrodes sur des corps (1, 16) en céramique électroconductrice se laissant traverser en raison de la présence de pores, **caractérisé par le fait que** dans les zones de contact (10, 11, 12, 13, 19) est infiltré en plus un métal électroconducteur qui augmente localement la conductibilité électrique.

11. Procédé selon la revendication 10, **caractérisé par le fait que** l'on utilise un composé céramique métallique et que l'on infiltre dans celui-ci un métal qui est identique au métal du composé céramique.

12. Procédé selon la revendication 10 ou 11, **caractérisé par le fait que** l'on utilise pour l'infiltration un mélange de substances dans lequel le métal est présent en quantité surstoechiométrique et qui, par échauffement à la température de réaction, se transforme partiellement en un composé céramique électroconducteur.

13. Procédé selon l'une des revendications 10 à 12, **caractérisé par le fait que** les zones de contact (10, 11, 12, 13) sont munies d'un revêtement de contact qui contient des substances pour la formation d'un composé céramique électroconducteur, que ces substances, par échauffement au moins à la température de réaction, sont transformées en composé céramique en formant des couches de contact poreuses (19) et que le métal s'infiltre en même temps ou après dans les pores des couches de contact (19).

14. Procédé selon la revendication 13, **caractérisé par le fait que** l'on utilise pour les revêtements de contact des substances qui se transforment en le même composé céramique que celui dont est constitué le corps (16).

15. Procédé selon la revendication 13 ou 14, **caractérisé par le fait que**, lors de la transformation, on obtient une porosité plus faible que celle du corps (16).

16. Procédé selon l'une des revendications 12 à 15, **caractérisé par le fait que** le métal est utilisé en une quantité telle qu'il s'infiltre partiellement aussi dans le corps (16).

17. Procédé selon la revendication 16, **caractérisé par le fait que** l'on réalise d'abord un corps central (2) et des corps de raccord (3), que le métal est infiltré dans les corps de raccord (3) et que les corps central et de raccord (2, 3) sont reliés les uns aux autres.

18. Procédé selon la revendication 17, **caractérisé par le fait que** les corps de raccord (3) sont placés aux extrémités du corps central (2).

19. Procédé selon les revendications 17 et 18, **caractérisé par le fait que** les corps de raccord (3) sont reliés au corps central (2) par brasage actif, brasage haute température ou soudage par diffusion ou que l'on applique sur les surfaces à assembler du corps de raccord (3) et/ou du corps central (2) un revêtement de liaison qui contient des substances pour la formation d'un composé céramique électroconducteur et que ces substances sont transformées en ce composé céramique par échauffement à au moins la température de réaction en formant une couche de liaison.

20. Procédé selon la revendication 19, **caractérisé par le fait que** la transformation des substances en composé céramique s'effectue en même temps que l'infiltration du métal dans les pores des zones de contact (10, 11, 12, 13).

21. Procédé selon la revendication 19 ou 20, **caractérisé par le fait que**, lors de la transformation, on obtient une porosité plus faible que celle du corps (1).

22. Procédé selon l'une des revendications 19 à 20, **caractérisé par le fait que** l'on infiltre dans la couche de liaison un métal électroconducteur et, que l'on utilise pour le revêtement de liaison des substances qui se transforment en un composé céramique métallique et que l'on utilise pour l'infiltration un métal qui est le même que le métal de ce composé céramique.

23. Procédé selon la revendication 22, **caractérisé par le fait que** le métal est utilisé en une quantité telle qu'il s'infiltre partiellement aussi dans le corps (1).

24. Procédé selon l'une des revendications 17 à 23, **caractérisé par le fait qu'**au moins un corps de raccord (3) est muni d'une pièce de raccord (15) qui présente des zones de contact.

25. Procédé selon la revendication 24, **caractérisé par le fait que** les pièces de raccord (15) sont constituées d'une céramique électroconductrice dans laquelle est infiltré du métal électroconducteur.

26. Procédé selon l'une des revendications 1 à 25, **caractérisé par le fait que** les électrodes sont reliées aux zones de contact (10, 11, 12, 13, 19) par brasage actif, brasage haute température ou soudage par diffusion.
